# EUROPEAN PATENT SPECIFICATION

(11) **EP 4 207 725 B1**
(45) Date of publication and mention of the grant of the patent: **03.09.2025**
(21) Application number: 21883128.7
(22) Date of filing: 14.10.2021
(51) Int. Cl.: H04M 1/656, H04M 1/00, H04W 4/16, H04M 1/72412, H04M 1/72469

(54) **ELECTRONIC DEVICE AND METHOD FOR RECORDING CALL**
ELEKTRONISCHE VORRICHTUNG UND VERFAHREN ZUR ANRUFAUFZEICHNUNG
DISPOSITIF ÉLECTRONIQUE ET PROCÉDÉ D'ENREGISTREMENT D'APPEL

(30) Priority: 23.10.2020 KR 20200138497
(43) Date of publication of application: 05.07.2023
(73) Proprietor: Samsung Electronics Co., Ltd., Suwon-si, Gyeonggi-do 16677 (KR)
(72) Inventor: PARK, Younggyun, Suwon-si, Gyeonggi-do 16677 (KR); LEE, Jinju, Suwon-si, Gyeonggi-do 16677 (KR); MYUNG, Kyuhoon, Suwon-si, Gyeonggi-do 16677 (KR); BAE, Soeun, Suwon-si, Gyeonggi-do 16677 (KR); BAEK, Seungrak, Suwon-si, Gyeonggi-do 16677 (KR); CHOI, Hyunsik, Suwon-si, Gyeonggi-do 16677 (KR); HWANG, Jinho, Suwon-si, Gyeonggi-do 16677 (KR)
(74) Representative: HGF
(86) International application number: PCT/KR2021/014251
(87) International publication number: WO 2022/086057

(56) References cited:
- JP-A- 2015 076 808
- KR-A- 20020 078 519
- KR-A- 20090 078 210
- KR-A- 20140 005 410
- KR-A- 20160 077 799
- KR-A- 20160 126 388
- US-A1- 2014 105 378
- US-A1- 2017 295 280
- US-A1- 2020 053 521

## Description

### [Technical Field]

The disclosure relates to an electronic device, for example, an electronic device that supports a recording function of call contents during a voice call with another device and a call recording method of the electronic device.

### [Background Art]

With the development of mobile communication technology and hardware/processor technology, portable electronic devices (hereinafter referred to as electronic devices) have become capable of high-speed data communication and, accordingly, provide various functions. Various services related to voice calls, which are unique functions of electronic devices, are also provided, and one example of such services may be a call continuity service (or call switch service) that continues the call by switching a call received by the electronic device to another electronic device. A user may make a call with a counterpart electronic device by using any one of a plurality of electronic devices registered through the call continuity service, and continue the call without interruption even when switching to another electronic device during the call.

The electronic device that provides a voice call service may provide a recording function of content of the call. When a user selects the recording function during the call, the voice uttered by the user and the voice received from the other party may be recorded in the memory of the electronic device.
KR 2016 0077799 A relates to a method of recording a call during a call in a private branch exchange (PBX).
US 20170295280A1 relate to relates to communication services that are designed to help businesses communicate with their customers.

### [Disclosure of Invention]

### [Technical Problem]

In the case of a call continuity service (or call switch service), a call may be made through another electronic device even when the call is received by the electronic device. Because the recording function is performed by an electronic device itself, continuity of the recording function is not guaranteed when the electronic device that is a subject of the call is changed.

Various embodiments of the disclosure relate to a method of providing a recording service based on the user's device-to-device connection usability during a call, and to continuously provide the call recording function even when the call service is switched to another electronic device.

### [Solution to Problem]

The present invention is defined by the independent claims. Further aspects of the present invention are outlined in the dependent claims. An electronic device according to various embodiments may include a display, a communication module, a microphone, a memory, and a processor operatively connected to the display, the communication module, the microphone, and the memory, and the processor may be configured to perform a call with a first external device through the communication module, generate, when a call recording function is started based on a user input, first recording data including user voice data inputted through the microphone and counterpart's voice data received from the first external device through the communication module, and store the first recording data in the memory, detect a switch of the call with the first external device to a second external device connected to the electronic device through a call continuity service, and store the second recording data including the counterpart's voice data and external voice data received from the second external device through the communication module in the memory.

A call recording method of an electronic device according to various embodiments may include performing a call with a first external device, generating, when a call recording function is started based on a user input, first recording data including user voice data inputted through a microphone of the electronic device and counterpart's voice data received from the first external device, and store the first recording data in the memory, detecting a switch of the call with the first external device to a second external device connected to the electronic device through a call continuity service, and storing, in the memory, second recording data including the counterpart's voice data and external voice data received from the second external device.

### [Advantageous Effects of Invention]

According to various embodiments of the disclosure, even if a call service is switched to another electronic device, an electronic device and a call recording function of the electronic device capable of continuously providing the call recording function may be provided.

In addition, various effects identified directly/indirectly in the disclosure may be provided.

### [Brief Description of Drawings]

FIG. 1 is a block diagram of an electronic device in a network environment according to various embodiments.
FIG. 2 illustrates several devices providing a call continuity service according to various embodiments.
FIG. 3 is a block diagram of an electronic device according to various embodiments.
FIGS. 4A and 4B illustrate operations of a first electronic device and a second electronic device according to an event occurring during a call according to various embodiments.
FIGS. 5A and 5B are block diagrams of each component providing a call recording function in an electronic device according to various embodiments.
FIGS. 6A to 6C illustrate screens displayed on a first electronic device and a second electronic device in a continuous call service according to various embodiments.
FIG. 7 is a flowchart of a call recording method of an electronic device according to various embodiments.

### [Mode for the Invention]

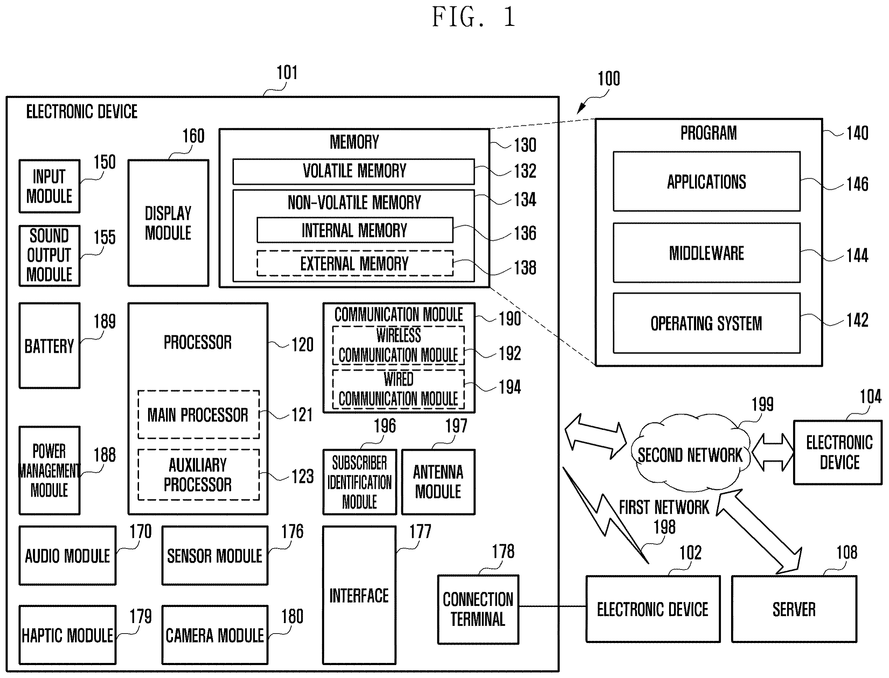

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

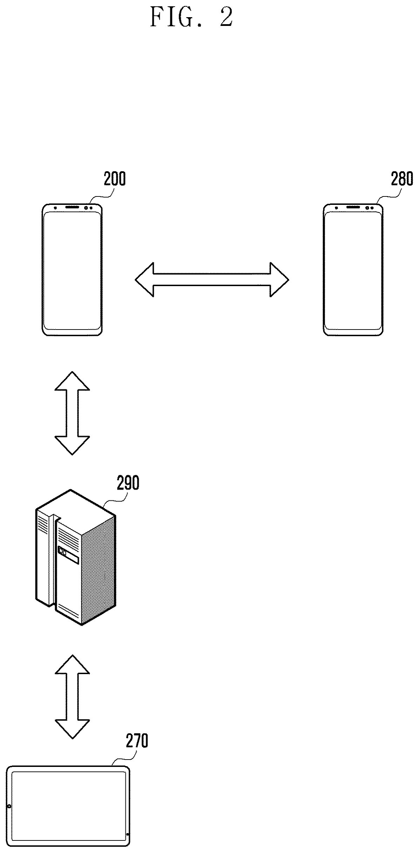

FIG. 2 illustrates several devices providing a call continuity service according to various embodiments.

Hereinafter, a device that receives a call through a cellular network will be defined as a first electronic device 200 (or primary device, PD), a device registered to switch a call of the first electronic device 200 in the call continuity service (or call switch service) will be defined as a second electronic device 270 (or secondary device, SD), and a device for transmitting a call will be defined as the counterpart's electronic device 280. The same device may operate as the first electronic device 200, the second electronic device 270, or the counterpart's electronic device 280 according to a call transmission/reception situation.

According to various embodiments, the first electronic device 200 is a portable electronic device (e.g., smartphone, tablet PC) having a voice call function, and may receive a voice call or video call connection request from the counterpart's electronic device 280. The first electronic device 200 may transmit/receive voice data with the counterpart's electronic device 280 through a cellular network, and a voice call between the first electronic device 200 and the counterpart's electronic device 280 may use an Internet protocol (IP)-based IP multimedia system (IMS) network (e.g., LTE voice communication service (VoLTE)), or use a 5G voice communication (VoNR) network and a circuit switching network. To this end, the first electronic device 200 may include a communication module necessary for accessing a cellular network, and may be assigned a phone number from its own mobile communication service provider.

According to various embodiments, a user of the first electronic device 200 may register the second electronic device 270 on a server 290 by interworking with the first electronic device 200 for a call continuity service. According to various embodiments, the user of the first electronic device 200 may register a plurality of devices including the second electronic device 270 by interworking with the first electronic device 200, and the call continuity service may be provided to a plurality of devices registered through the same account. The second electronic device 270 may be the same type of device as the first electronic device 200 (e.g., a smartphone) or a different type of device (e.g., a tablet PC, PDA, laptop PC, or smartwatch). The server 290 may perform registration, authentication, database and/or data transmission/reception functions related to the call continuity service. The first electronic device 200 and the second electronic device 270 may be connected to the server 290 through a public data network (PDN). To this end, the second electronic device 270 may include a communication module supporting a cellular network (e.g., LTE network, 5G network) and/or a local area network (e.g., Wi-Fi).

According to various embodiments, the user of the first electronic device 200 may register identification information of the second electronic device 270 on an application supporting the call continuity service of the first electronic device 200, and in this case, the phone number of the first electronic device 200, the user's account, and the identification information of the second electronic device 270 may be mapped and stored in the database of the server 290.

According to various embodiments, when the counterpart's electronic device 280 attempts to make a call to the phone number of the first electronic device 200, a call request may be transmitted to the first electronic device 200 through a cellular network, and an application supporting the call continuity service may transmit the call request to the server 290. The server 290 may identify the registered second electronic device 270 mapped with the first electronic device 200, and transmit the call request from the counterpart's electronic device 280 to the first electronic device 200 to the second electronic device 270. The first electronic device 200 and the second electronic device 270 may display a call connection screen at least partially simultaneously or sequentially, and the user may perform a call with the other part's electronic device 280 by accepting the call connection through either the first electronic device 200 or the second electronic device 270. Hereinafter, a case where a user makes a call with the counterpart's electronic device 280 by using the first electronic device 200 may be referred to as a general call, and a case where a call is made with the counterpart's electronic device 280 through relaying of the first electronic device 200 by using the second electronic device 270 may be referred to as a call and message continuity (CMC) call.

According to various embodiments, when a user makes a call with the counterpart's electronic device 280 through the second electronic device 270, the counterpart's voice data transmitted from the counterpart's electronic device 280 may be transmitted to the first electronic device 200 through a cellular network, and the first electronic device 200 may transmit the counterpart's voice data to the second electronic device 270 through the PDN. Similarly, user voice data inputted from the second electronic device 270 may transmitted to the first electronic device 200 through the PDN, and the first electronic device 200 may transmit the user voice data to the first electronic device 200 through the cellular network.

According to another embodiment, the counterpart's voice data transmitted from the counterpart's electronic device 280 may be transmitted to the second electronic device 270 through a cellular network or PDN without passing through the first electronic device 200, and user voice data of the second electronic device 270 may also be transmitted to the counterpart's electronic device 280 without passing through the first electronic device 200.

According to various embodiments, the first electronic device 200 may perform a call recording function when making a general call connection with the counterpart's electronic device 280. When the call recording function is executed, the first electronic device 200 may store recording data including the user voice data inputted through the microphone of the first electronic device 200 and the counterpart's voice data received from a memory of the second electronic device 270.

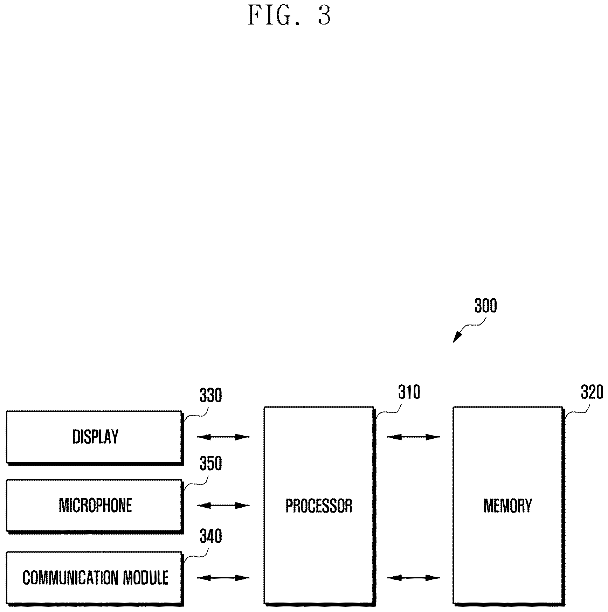

According to various embodiments, the first electronic device 200 may perform a call recording function without interruption even when the call connection with the counterpart's electronic device 280 is switched to the second electronic device 270 through the call continuity service. Hereinafter, various embodiments for ensuring continuity of the call recording function when the call connection is switched will be described with reference to FIGS. 3 to 7.

Among various embodiments in the disclosure, features that provide continuity of the call recording function in a situation in which the first electronic device 200 receives a call request from the counterpart's electronic device, makes the call, and then switches the call connection to the second electronic device 270 will be mainly described, but various embodiments are not limited thereto.

According to an embodiment, even when the first electronic device 200 becomes a call originator and transmits a call request to the counterpart's electronic device 280, continuity of the call recording function may be provided. For example, the second electronic device 270 may have a subscriber identification module (SIM) and be assigned a phone number of the second electronic device 270. In a state where the first electronic device 200 and the second electronic device 270 are connected through the call continuity service, when the second electronic device attempts to transmit a call to the counterpart's electronic device 280 according to user input, the second electronic device 270 may display a pop-up UI for selecting whether to transmit the call to the phone number of the second electronic device 270 or to the phone number of the first electronic device 200 connected to the call continuity service.

When the phone number of the first electronic device 200 is selected in the pop-up UI, the call according to the call continuity service may be transmitted from the first electronic device 270 to the counterpart's electronic device 280 through (or not pass through) the first electronic device 200. In this case, in a state where the second electronic device 270 and the counterpart's electronic device 280 are connected by a call, the call connection may be switched to the first electronic device 200. Even when the call connection is switched to another device while the call recording function is running during the call connection to the first electronic device 270 or the second electronic device 270, the call recording function may be continuously provided as in the embodiments described below.

When the phone number of the second electronic device 270 is selected in the pop-up UI, a call connection request may be made to the counterpart's electronic device 280 by using the second electronic device 270. In this case, the roles of the first electronic device 200 and the second electronic device 270 may be interchanged, and for example, call recording data may be stored in the memory of the second electronic device 270 in a state where the call connection is switched to the first electronic device 200.

FIG. 3 is a block diagram of an electronic device according to various embodiments.

Hereinafter, a configuration of a first electronic device (e.g., the first electronic device 200 of FIG. 2) will be described, and a second electronic device (e.g., the second electronic device 270 of FIG. 2) may also include at least some of the components and/or functions illustrated in FIG. 3.

Referring to FIG. 3, an electronic device 300 may include a display 330, a microphone 350, a communication module 340, a processor 310, and a memory 320, and some of the components illustrated in various embodiments may be omitted or replaced. The electronic device 300 may further include at least some of the configurations and/or functions of the electronic device 101 of FIG. 1. At least some of the components of the illustrated (or not illustrated) electronic device 300 may be operatively, functionally, and/or electrically connected to each other.

According to various embodiments, the display 330 may display various images under the control of the processor 310. For example, the display 330 may be implemented as any one of a liquid crystal display (LCD), a light-emitting diode (LED) display, and an organic light-emitting diode (OLED) display, but is not limited thereto. The display 330 may be configured as a touch screen that detects a touch and/or proximity touch (or hovering) input using a part of the user's body (e.g., a finger) or an input device (e.g., a stylus pen). At least a part of the display 330 may be flexible, and may be implemented as an expandable display such as a foldable display 330 or a rollable display 330. The display 330 may include at least some of the components and/or functions of the display module 160 of FIG. 1.

According to various embodiments, the microphone 350 may collect a user voice and/or an external sound and convert the same into a voice signal that is digital data. The electronic device 300 may include a microphone in a part of the housing (not illustrated) or may receive a voice signal collected from an external microphone wired/wireless connected.

According to various embodiments, the communication module 340 may communicate with an external device through a wireless network. The communication module 340 may include hardware and software modules for transmitting and receiving data in a cellular network (e.g., LTE network, 5G network) and a local area network (e.g., Wi-Fi). The communication module 340 may include at least some of the components and/or functions of the communication module 190 of FIG. 1.

According to various embodiments, the memory 320 may temporarily or permanently store various data including volatile memory and non-volatile memory. The memory 320 may include at least some of the configuration and/or functions of the memory 130 of FIG. 1, and store the program 140 of FIG. 1.

According to various embodiments, the memory 320 may store various instructions that may be executed by the processor 310. These instructions may include control commands such as arithmetic and logic operations, data movement, and input/output that may be recognized by the processor 310.

According to various embodiments, the processor 310 is a component capable of control of each component of the electronic device 300 and/or performing calculations or data processing related to communication, and may include one or more processors 310. The processor 310 may include at least some of the components and/or functions of the processor 120 of FIG. 1.

According to various embodiments, calculation and data processing functions that the processor 310 may implement on the electronic device 300 will not be limited, but hereinafter, various embodiments for providing continuity of the recording function when a call connection is switched between the electronic device 300 (e.g., the first electronic device 200 of FIG. 2) and another electronic device (e.g., the second electronic device 270 of FIG. 2) in the call continuity service (or a call switch service) will be described. Operations of the processor 310 to be described below may be performed by loading instructions stored in the memory 320.

According to various embodiments, the processor 310 may receive a call connection request from the counterpart's electronic device (or first external device) (e.g., the counterpart's electronic device 290 of FIG. 2) through the communication module 340. Here, the call connection request may be transmitted through an Internet protocol (IP)-based IP multimedia system (IMS) network (e.g., LTE voice communication service (VoLTE), 5G voice communication (VoNR)) and/or a circuit switching network.

According to various embodiments, the processor 310 may display a call connection screen on the display 330 in response to receiving a call connection request, and perform a call connection with the counterpart's electronic device according to a user input.

According to various embodiments, when a call connection request is received from the counterpart's electronic device, the processor 310 may transmit the call connection request to the second electronic device (or second external device) (e.g., the second electronic device 270 of FIG. 2) registered in the call continuity service. Here, the second electronic device is a device registered in conjunction with the electronic device 300 for call continuation service, and the user may register the electronic device 300 and the second electronic device in conjunction with each other on an application supporting the call continuity service of the electronic device 300 or the second electronic device.

According to various embodiments, when receiving a call connection request from the counterpart's electronic device, the electronic device 300 may transmit information related to the call connection request of the counterpart's electronic device to a server (e.g., the server 290 in FIG. 2) providing the call continuity service through a PDN by cellular communication (e.g., LTE, 5G) or local area communication (e.g., Wi-Fi), and request information on another electronic device stored in conjunction with the call continuity service through the account of the electronic device 300. The server may transmit information related to the call connection request of the counterpart's electronic device to the second electronic device registered in conjunction with the electronic device 300. The second electronic device receiving the information related to the call connection request may display a call connection screen and perform a call connection with the counterpart's electronic device according to a user input. The user may perform a call with the counterpart's electronic device by using either the electronic device 300 or the second electronic device, and switch the call with the counterpart's electronic device to another device during the call by using either one. In the case of a call using the second electronic device, voice data transmitted and received between the second electronic device and the counterpart's electronic device may be transmitted and received through the electronic device 300.

According to various embodiments, the processor 310 may execute a call recording function based on a user input while performing a call with the counterpart's electronic device. For example, a call screen displayed on the display 330 during the call may include a UI for selecting various functions available during the call, and when a call recording button is selected on the UI, call recording may be started.

According to various embodiments, when call recording is started, the processor 310 may store a first recording data including the user voice data inputted through the microphone 350 and the counterpart's voice data received from the counterpart's electronic device through the communication module 340 in the memory 320.

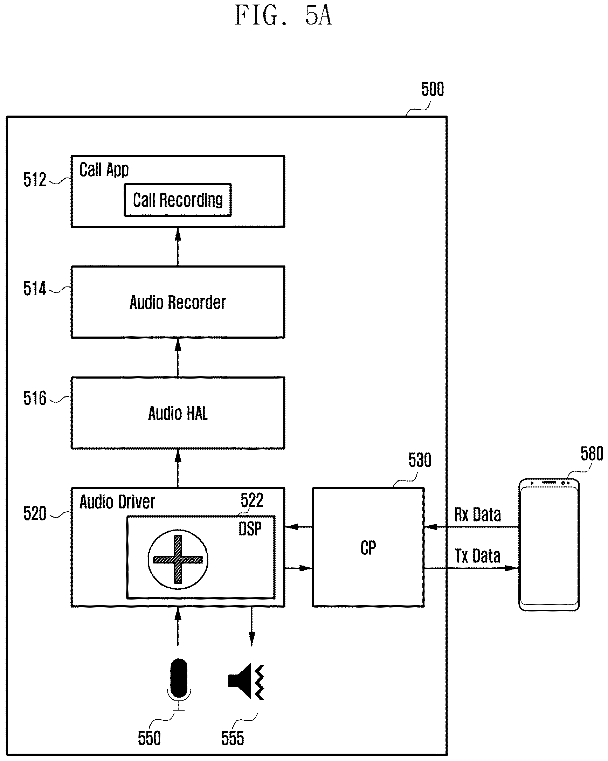

According to various embodiments, when a general call is connected, the processor 310 may mix user voice data input through the microphone 350 and the counterpart's voice data received from the counterpart's electronic device by using an audio driver, transmit the mixture to an audio recorder, and generate first recording data from data mixed by using the audio recorder. In the case of a general call, data transmitted and received from the counterpart's electronic device may be delivered through the communication processor to the kernel-level audio driver, and the audio driver may mix user voice data inputted from the microphone 350. The mixed data may be transmitted through an audio hardware abstraction layer (HAL) to the audio recorder of the framework, and the audio recorder may process the recording data and store the same in the memory 320. This embodiment will be described in more detail with reference to FIG. 5A.

According to various embodiments, the processor 310 may display an icon indicating that call recording is running on the call screen. In addition, the processor 310 may transmit information indicating that the call recording function is running to the second electronic device through the communication module 340, and the second electronic device may display the icon indicating that call recording is running on the call waiting screen.

According to various embodiments, while a general call is being made with the counterpart's electronic device through the electronic device 300, a call switch event to a CMC call of the second electronic device may occur. For example, when a user selects a button corresponding to call switch on the second electronic device, a current call may be switched to the second electronic device. When the call is switched to the second electronic device, the electronic device 300 may operate in a call waiting state, and even in the call waiting state, the electronic device 300 may maintain a call connection with the counterpart's electronic device and perform a function of relaying data transmitted and received between the counterpart's electronic device and the second electronic device.

According to various embodiments, the electronic device 300 and/or the second electronic device may continue to perform the call recording function even when the call is switched to the CMC call of the second electronic device when the recording function is executed before the call switch.

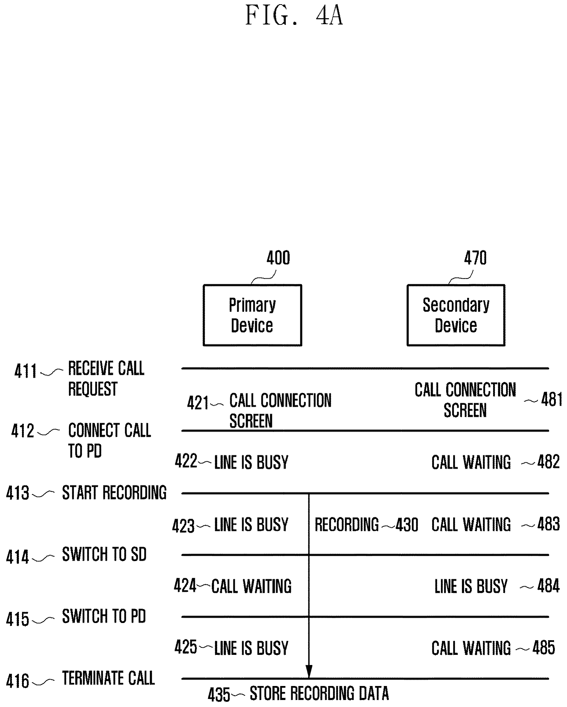

According to an embodiment (e.g., FIG. 4A), the processor 310 may store second recording data including the counterpart's voice data received from the counterpart's electronic device and external voice data received from the second electronic device in the memory 320.

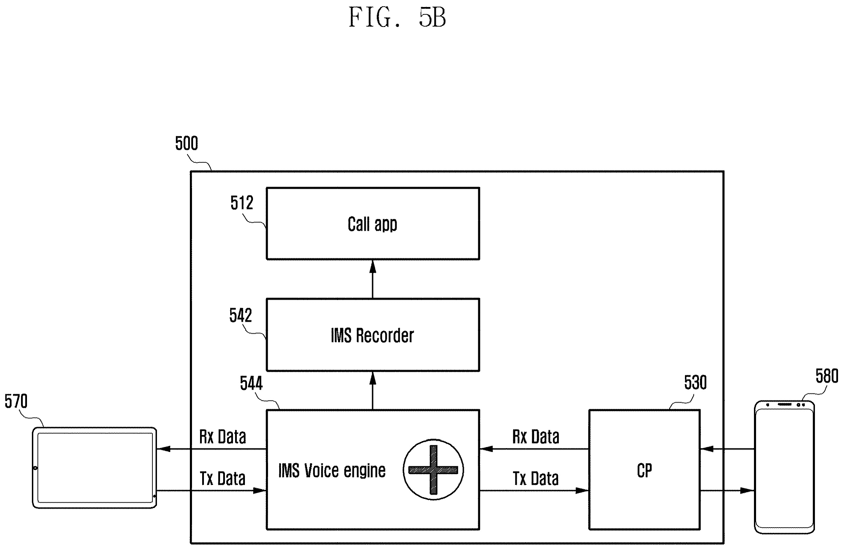

According to this embodiment, the processor 310 may mix the counterpart's voice data received from the counterpart's electronic device and external voice data received from the second electronic device by using an IMS voice engine when switching to the CMC call. The IMS voice engine may be defined on the framework. The IMS voice engine may transmit the mixed data to the IMS recorder, and the IMS recorder may process and store the recording data in the memory 320. In this way, during the CMC call recording and unlike the general call recording, the electronic device 300 may mix and process recording data by using a framework-level IMS voice engine and an IMS recorder without using a kernel-level audio driver. This embodiment will be described in more detail with reference to FIG. 5B.

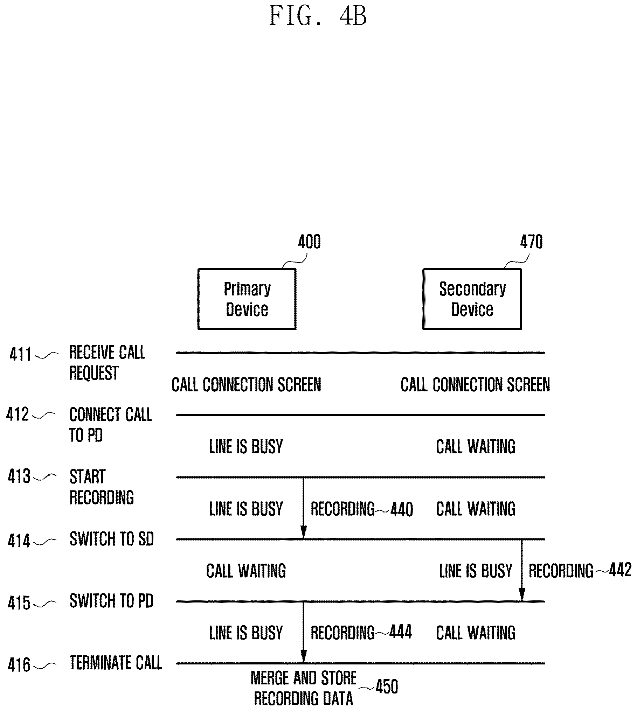

According to another embodiment (e.g., FIG. 4B), when switching to the CMC call of the second electronic device, a call recording function may be executed by the second electronic device. For example, the second electronic device may mix the counterpart's voice data of the counterpart's electronic device received through the electronic device 300 and the user voice data inputted through the microphone 350 of the second electronic device, store the mixture in the memory 320 of the second electronic device, and transmit the mixture to the electronic device 300. The electronic device 300 may receive the corresponding recording data during or after a call of the second electronic device, merge the recording data previously (or later) stored in the memory 320 of the electronic device 300, and store the recording data as single audio data.

According to various embodiments, when a call is switched to the second electronic device, the processor 310 may display a call waiting screen on the display 330, and display an item (e.g., icon, text information) indicating the call recording function on the call waiting screen when the call recording function is running.

According to various embodiments, after the call is switched to the CMC call of the second electronic device according to the user input, the call may be re-switched to the general call of the electronic device 300 according to the user input. In this case, the processor 310 may store third recording data including the user voice data and the counterpart's voice data in the memory 320.

According to various embodiments, the processor 310 may merge the recording data (e.g., first recording data, third recording data) obtained during a general call through the electronic device 300 and the recording data (e.g., second recording data) obtained during a CMC call through the second electronic device and store merged data in the memory 320 as a single file. Recording data obtained during the general call is processed by the audio recorder, and recording data obtained during the CMC call is processed by the IMS recorder, so they may be initially generated as separate recording data. The processor 310 may store recording data as single file data when each recording data is obtained or when a call with the counterpart's electronic device is terminated.

FIGS. 4A and 4B illustrate operations of a first electronic device and a second electronic device according to an event occurring during a call according to various embodiments.

FIG. 4A illustrates an embodiment in which a call recording function continues on the first electronic device 400 when switching to a CMC call of the second electronic device 470. The first electronic device 400 (e.g., the first electronic device 200 of FIG. 2, the electronic device 300 of FIG. 3) and the second electronic device 470 (e.g., the second electronic device 270 of FIG. 2) may be interworked and registered in a server (e.g., the server 290 of FIG. 2) for a call continuity service.

According to various embodiments, in operation 411, the first electronic device 400 may receive a call connection request from the counterpart's electronic device.

According to various embodiments, in operation 421, the first electronic device 400 may display a call connection screen on a display (e.g., the display 330 of FIG. 3) in response to the call connection request. The first electronic device 400 may transmit information related to the call connection request to the second electronic device 470. In operation 481, the second electronic device 470 that has received the information related to the call connection request of the counterpart's electronic device may display the call connection screen on the display.

According to various embodiments, in operation 412, the first electronic device 400 may accept the call according to a user input on the first electronic device 400 and start a general call with the counterpart's electronic device. In operation 422, the first electronic device 400 may transmit/receive the user voice data inputted through the microphone and the counterpart's voice data of the counterpart's electronic device in real time. The first electronic device 400 may display a call screen on the display. In operation 482, the second electronic device 470 may display a call waiting screen.

According to various embodiments, in operation 413, a call recording function may be started according to a user input on the first electronic device 400. According to an embodiment, in a case where the automatic call recording function is configured in advance, the call recording function may be started when the call is connected without the user input.

In operation 423, the first electronic device 400 may store first recording data including the user voice data and the counterpart's voice data in the memory. In operation 483, the second electronic device 470 may maintain the call waiting state.

According to various embodiments, in operation 414, the call connection may be switched to the second electronic device 470 according to the user input on the first electronic device 400 and/or the second electronic device 470. In operation 484, the second electronic device 470 may perform a CMC call with the counterpart's electronic device, and in operation 424, and the first electronic device 400 may relay external voice data and the counterpart's voice data transmitted and received between the second electronic device 470 and the counterpart's electronic device while maintaining a communication connection with the counterpart's electronic device. The first electronic device 400 may store second recording data including external voice data and the counterpart's voice data.

According to various embodiments, in operation 415, the call connection may be re-switched to the first electronic device 400 according to the user input on the first electronic device 400 and/or the second electronic device 470. In operation 425, the first electronic device 400 may make the general call again and store third recording data including user voice data and the counterpart's voice data. In operation 485, the second electronic device 470 may switch to the call waiting state.

According to various embodiments, in operation 416, when the call connection with the counterpart's electronic device is terminated, in operation 435, the first electronic device 400 may merge the obtained first recording data, the second recording data, and the third recording data and store them in the memory as single file data. According to another embodiment, the first recording data, the second recording data, and the third recording data may be stored in the memory as separate file data.

Compared to FIG. 4A, FIG. 4B has a difference in that the call recording function is performed by the second electronic device 470 when switching to the CMC call of the second electronic device 470.

Referring to FIG. 4B, in operation 414, when switching to the CMC call of the second electronic device 470, the first electronic device 400 may transmit information indicating that the call recording function is being performed to the second electronic device 470, and in operation 442, store the counterpart's voice data and the voice data inputted from the second electronic device 470.

In operation 416, when the call is terminated, the second electronic device 470 may transmit the recording data to the first electronic device 400, and in operation 450, the first electronic device 400 may merge the recording data recorded by the first electronic device 400 and the recording data received from the second electronic device 470 and store them as single file data in the memory. In this case, in the recording data, the call section of the first electronic device 400 and the call section of the second electronic device 470 may be specified as separate flags and distinguished from each other. According to another embodiment, the second electronic device 470 may transmit recorded data to the first electronic device 400 at specified periods. According to another embodiment, the recording data obtained from the first electronic device 400 and the recording data obtained from the second electronic device 470 may be stored in the memory as separate file data.

According to various embodiments, when storing recording data, the first electronic device 400 may include information indicating the first electronic device 400 and/or the second electronic device 470 in a file name stored so that the user may recognize on which device the recording data is when connecting the call. Alternatively, the first electronic device 400 may distinguish recording data with icons indicating the first electronic device 400 and/or the second electronic device 470.

According to various embodiments, the first electronic device 400 may reproduce stored recording data after the call ends. According to various embodiments, when the call connection is switched, in a case where the call content of the first electronic device 400 and the call content of the second electronic device are recorded together, the first electronic device 400 may display the call content of the first electronic device 400 and the call content of the second electronic device 470 to be distinguished in the user interface displayed on the display when the recording data is reproduced. For example, text/image information indicating the call section of the first electronic device 400 and the call section of the second electronic device may be provided or each call section may be displayed as a separate graphic effect in a progress bar indicating a reproducing section of recording data.

In FIGS. 4A and 4B, although an embodiment in which continuity of a call recording function is provided in a situation where the first electronic device 400 receives a call request from the counterpart's electronic device and makes the call, and then the call connection is switched to the second electronic device 470 has been described in various embodiments, the various embodiments of the disclosure are not limited thereto.

According to an embodiment, even when the second electronic device 470 becomes the call receiver and receives the call from the counterpart's electronic device 480, continuity of the call recording function may be provided. For example, when the call is first received by using the second electronic device 470 and the call recording function is executed by configuring an automatic recording function or a user input on the first electronic device 400 or the second electronic device 470, the first electronic device 400 (or the second electronic device 470) may record the counterpart's voice data and the user voice data transmitted from the second electronic device 470. Thereafter, when the call connection is switched to the first electronic device 400, the first electronic device 400 may record the counterpart's voice data and the user voice data obtained by the first electronic device 400.

FIGS. 5A and 5B are block diagrams of each component providing a call recording function in an electronic device according to various embodiments.

FIG. 5A illustrates configurations for recording a call while the first electronic device 500 is making a general call with the counterpart's electronic device 580.

According to various embodiments, the first electronic device 500 may mix user voice data inputted through a microphone 550 and the counterpart's voice data received from the second electronic device and transmit the mixture to an audio recorder 514 by using an audio driver 520, and generate first recording data from the mixed data by using the audio recorder 514.

Referring to FIG. 5A, when the call recording function is performed, a call application 512, the audio recorder 514, an audio HAL 516, and/or an audio driver 520 of the first electronic device 500 may be executed.

According to various embodiments, the audio driver 520 may include a digital signal processor (DSP) 522 that is operated by a kernel and mixes call transmission/reception data. The counterpart's voice data received from the counterpart's electronic device 580 may be provided to the audio driver 520 through a communication processor 530, and the audio driver 520 may output the data through a receiver 555. In addition, user voice data inputted through the microphone 550 may be provided to the audio driver 520 and transmitted to the counterpart's electronic device 580 through the communication processor 530.

According to various embodiments, the audio driver 520 may mix the user voice data inputted through the microphone 550 and the counterpart's voice data received from the second electronic device by using the DSP 522. The audio driver 520 may transmit the mixed data to the audio recorder 514 through the audio hardware abstract layer (HAL) 516, which is an upper layer.

According to various embodiments, the audio recorder 514 may support a call recording function at the framework level. The audio recorder 514 may process data received from the audio driver 520 and store recording data in a memory.

According to various embodiments, the audio recorder 514 may provide information related to the call recording function to the call application 512, and the call application 512 may display an item indicating the call recording function on the call screen.

FIG. 5B illustrates configurations for recording a call in the first electronic device 500 while the second electronic device 570 is performing a CMC call with the counterpart's electronic device 580.

According to various embodiments, the first electronic device 500 may mix the counterpart's voice data received from the counterpart's electronic device 580 and external voice data received from the second electronic device 570 and transmit the mixture to an IMS recorder 542 by using the IP multimedia subsystem (IMS) voice engine, and generate second recording data from the mixed data by using the IMS recorder 542.

Referring to FIG. 5B, when a CMC call recording function is performed, the call application 512, the IMS recorder 542, and the IMS voice engine 544 of the first electronic device 500 may be executed.

According to various embodiments, during the CMC call by using the second electronic device 570, the first electronic device 500 may transmit and receive data with the second electronic device 570 through the IMS network. For example, the first electronic device 500 and the second electronic device 570 may transmit and receive call data through the IP IMS network by using a cellular communication (e.g., LTE, 5G) or a local area network communication (e.g., Wi-Fi). In the case of such an IMS-based call connection, an audio driver (e.g., the audio driver 520 of FIG. 5A) may not process mixing of call data. Accordingly, voice data of the CMC call generated by the IMS voice engine 544 between the first electronic device 500 and the second electronic device 570 may be difficult to transfer to the audio recorder (e.g., the audio recorder in FIG. 5A).

Accordingly, according to various embodiments, the first electronic device 500 may perform the call recording function by using the IMS voice engine 544 and the IMS recorder 542 without using the audio driver in a CMC call situation.

According to various embodiments, during a CMC call between the second electronic device 570 and the counterpart's electronic device 580, the IMS voice engine 544 may mix the counterpart's voice data received from the counterpart's electronic device 580 through the CP 530 and the user voice data received from the second electronic device 570. The IMS voice engine 544 may transmit the mixed data to the IMS recorder 542 of the framework, and the IMS recorder 542 may process data transferred from the IMS voice engine 544 and store recording data in a memory. The IMS recorder 542 may provide information related to the call recording function to the call application 512, and the call application 512 may display an item indicating the call recording function on the call screen.

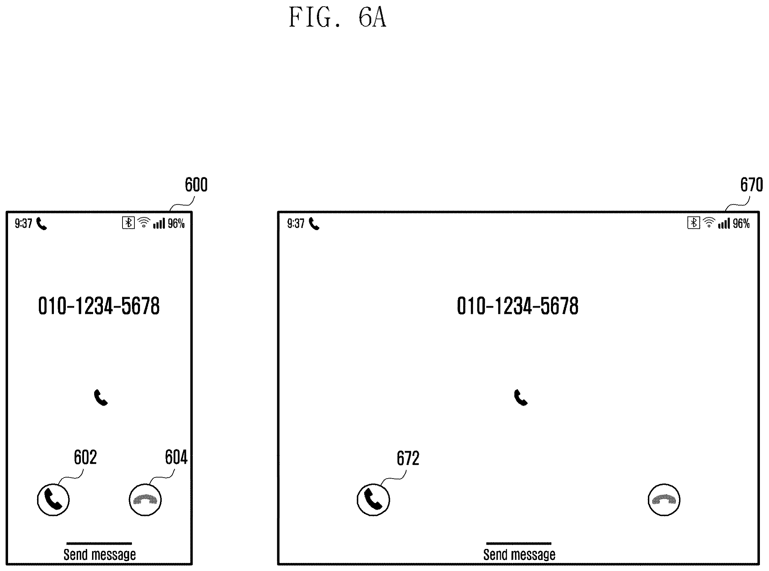

FIGS. 6A to 6C illustrate screens displayed on a first electronic device and a second electronic device in a continuous call service according to various embodiments.

FIG. 6A illustrates screens displayed on the first electronic device 600 (e.g., the first electronic device 200 of FIG. 2, the electronic device 300 of FIG. 3) and the second electronic device 670 (e.g., the first electronic device 200 of FIG. 2) when a call connection is received from the counterpart's electronic device (e.g., the counterpart's electronic device 290 in FIG. 2). The first electronic device 600 and the second electronic device 670 may be interworked and registered in a server (e.g., the server 290 of FIG. 2) for a call continuity service.

According to various embodiments, the first electronic device 600 may transmit information related to the call connection request to the second electronic device 670 when a call connection request is received from the counterpart's electronic device through the cellular network.

Referring to FIG. 6A, the first electronic device 600 may display a call connection screen by using a call application. For example, the call connection screen may include a call acceptance button 602 and a call rejection button 604, and include information such as the phone number of the counterpart's electronic device. The second electronic device 670 may display the call connection screen by using the call application.

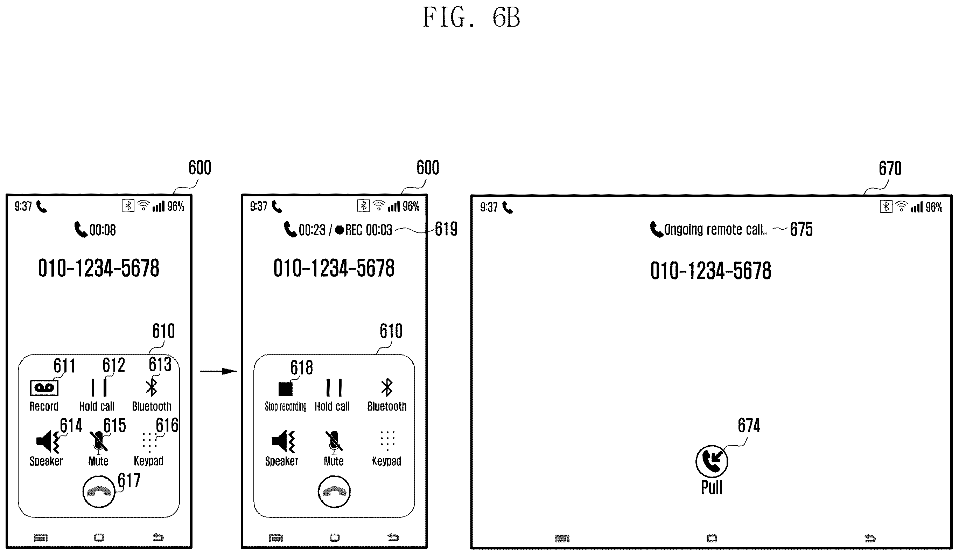

FIG. 6B illustrates screens of the first electronic device 600 and the second electronic device 670 when a general call is connected between the first electronic device 600 and the counterpart's electronic device according to a user input on the first electronic device 600 (e.g., the call accept button 602 in FIG. 6A).

Referring to FIG. 6B, when the first electronic device 600 makes a general call, the second electronic device 670 may operate in a call waiting state and display a call waiting screen. The call waiting screen may include a call switch button 674 for switching the second electronic device 670 to a CMC call, and may include information 675 indicating that the call is in the call waiting state.

The first electronic device 600 may display a call UI 610 including at least one usable function during a call. For example, the call UI 610 may include at least one of a recording button 611, a call hold button 612, a Bluetooth connection button 613, a speakerphone button 614, a mute button 615, a keypad button 616, and a call end button 617. When a user selects the recording button 611 on the call UI 610 while the call is ongoing, a call recording function may be executed. When the call recording function is executed, the recording button 611 of the call UI 610 of the first electronic device 600 may be changed to the recording stop button 618, and an item 619 (e.g., icon, text information) indicating that the call recording function is being executed may be displayed on the call screen.

According to an embodiment, when the call recording function is started, the first electronic device 600 may transmit corresponding information to the second electronic device 670, and the second electronic device 670 may display an item indicating that the call is being recorded on the call waiting screen.

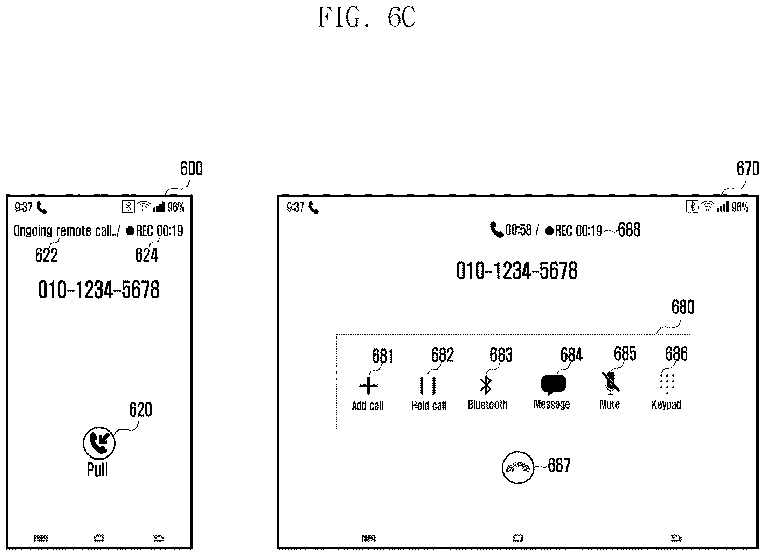

FIG. 6C illustrates screens of the first electronic device 600 and the second electronic device 670 when switching to a CMC call between the second electronic device 670 and the counterpart's electronic device according to a user input on the second electronic device 670 (e.g., the call transfer button 674 in FIG. 6B). According to an embodiment, in a state in which a general call is connected to the first electronic device 600, a button for selecting a call connection switch to the second electronic device 670 may be provided on the call UI of the first electronic device 600, and the call may be switched to the CMC call of the second electronic device 670 according to selection of the corresponding button.

Referring to FIG. 6C, the second electronic device 670 may display a call UI 680 according to a call switch. The call UI 680 of the second electronic device 670 may include at least one of a caller add button 681, a call hold button 682, a Bluetooth connection button 683, a message button 684, a mute button 685, a keypad button 686, and a call end button 687. In addition, because the call recording function was being executed in the first electronic device 600 before the call switch, the call recording function on the first electronic device 600 may continue even after the call switch, and the second electronic device 670 may display an item 688 indicating that the call is being recorded.

The first electronic device 600 may switch to a call waiting state and display a call waiting screen. The call waiting screen may include a call switch button 620 for switching to a general call of the first electronic device 600, and include information 622 indicating the call waiting state and an item 624 indicating that the call is being recorded.

According to various embodiments, while the general call of the first electronic device 600 or the CMC call of the second electronic device 670 is in progress, the call applications of the first electronic device 600 and the second electronic device 670 may be continuously executed and display a call UI corresponding to each situation. When both the general call of the first electronic device 600 and the CMC call of the second electronic device 670 are terminated, the first electronic device 600 and the second electronic device 670 may terminate the execution of the call application.

An electronic device (e.g., the electronic device 200 in FIG. 2) according to various embodiments may include a display (e.g., the display 330 in FIG. 3), a communication module (e.g., the communication module 340 in FIG. 3), a microphone. (e.g.: the microphone 350 of FIG. 3), a memory (e.g., the memory 320 of FIG. 3), and a processor (e.g., the processor 310 of FIG. 3) operatively connected to the display, the communication module, the microphone, and the memory, and the processor may be configured to perform a call with a first external device (e.g., the counterpart's electronic device 280 of FIG. 2) through the communication module, generate, when a call recording function is started based on a user input, first recording data including user voice data inputted through the microphone and the counterpart's voice data received from the first external device through the communication module, and store the first recording data in the memory, detect a switch of the call with the first external device to a second external device (e.g., the second electronic device 270 of FIG. 2) connected to the electronic device through a call continuity service, and store, in the memory, second recording data including the counterpart's voice data and external voice data received from the second external device through the communication module.

According to various embodiments, the processor may be configured to merge the first recording data and the second recording data and store the merged data in the memory as single file data.

According to various embodiments, the processor, when receiving a call connection request with the first external device, may be configured to transmit information related to the call connection request to the second external device connected by the call continuity service, and the switch of the call with the first external device may be started according to an input on the second external device.

According to various embodiments, the communication module may be configured to receive external voice data received from the second external device through a cellular network or a local area network using an Internet protocol.

According to various embodiments, the processor may be configured to mix user voice data inputted through the microphone and the counterpart's voice data received from the first external device and transmit the mixture to an audio recorder (e.g., the audio recorder 514 in FIG. 5A) by using an audio driver (e.g., the audio driver 520 of FIG. 5A), and generate the first recording data from the mixed data by using the audio recorder.

According to various embodiments, the processor may be configured to mix the counterpart's voice data received from the first external device and the external voice data received from the second external device and transmit the mixture to an IMS recorder (e.g., the IMS recorder 542 in FIG. 5B) by using an IP multimedia subsystem (IMS) voice engine (e.g., the IMS voice engine 544 in FIG. 5B), and obtain the second recording data from the mixed data by using the IMS recorder.

According to various embodiments, the processor, when a call switch to the second external device is detected while the call recording function is in progress, may be configured to transmit information indicating that the call recording function is in progress to the second external device.

According to various embodiments, the processor, when a call switch to the second external device is detected while the call recording function is in progress, may be configured to display an item (e.g., the item 624 in FIG. 6C) indicating the call recording function on a screen indicating a call waiting state.

According to various embodiments, the processor may be configured to detect a re-switch of the call with the first external device to the electronic device in a state in which the call with the first external device is switched to the second external device, and generate third recording data including the user voice data and the counterpart's voice data and store the third recording data in the memory.

An electronic device according to various embodiments may include a display, a communication module, a microphone, a memory, and a processor operatively connected to the display, the communication module, the microphone, and the memory, and the processor may be configured to perform a call with a first external device (e.g., the counterpart's electronic device 280 of FIG. 2) through the communication module, generate, when a call recording function is started based on a user input, first recording data including user voice data inputted through the microphone and the counterpart's voice data received from the first external device through the communication module, and store the first recording data in the memory, detect a switch of the call with the first external device to a second external device connected to the electronic device through a call continuity service, transmit the counterpart's voice data to the second external device in response to the detection of the call switch, and receive second recording data including external voice data inputted by the second external device and the counterpart's voice data from the second external device, and store the second recording data in the memory.

According to various embodiments, the processor may be configured to detect a re-switch of the call with the first external device to the electronic device in a state in which the call with the first external device is switched to the second external device, and generate third recording data including the user voice data and the counterpart's voice data and store the third recording data in the memory.

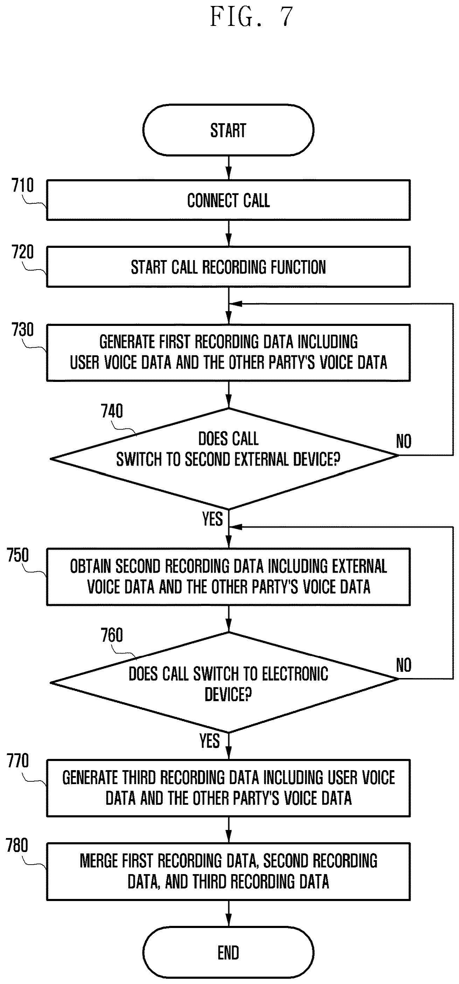

FIG. 7 is a flowchart of a call recording method of an electronic device according to various embodiments.

The illustrated method may be performed by the first electronic device (e.g., the electronic device 300 of FIG. 3, the first electronic device 400 of FIGS. 4A and 4B) described with reference to FIGS. 1 to 6, and description of the technical features described above will be omitted below.

According to various embodiments, in operation 710, the first electronic device may perform a call connection with the counterpart's electronic device. When the first electronic device receives the call connection request, information related to the call connection request may be transmitted to the second electronic device, and the first electronic device and the second electronic device may display call connection screens. According to a user input on the call connection screen of the first electronic device, the first electronic device may start a call with the counterpart's electronic device.

According to various embodiments, in operation 720, the first electronic device may start a call recording function based on the user input. For example, the first electronic device may start the call recording function when the recording button is selected on the call UI of the call screen (e.g., the call UI 610 of FIG. 6B).

According to various embodiments, in operation 730, the first electronic device may generate user voice data obtained through a microphone and first recording data received from the counterpart's electronic device and store the same in a memory according to the start of the call recording function.

According to various embodiments, when a general call is connected, the first electronic device may mix user voice data inputted through the microphone and the counterpart's voice data received from the second electronic device by using an audio driver, and transmit the mixture to the audio recorder, and generate first recording data from mixed data by using the audio recorder.

According to various embodiments, in operation 740, a call switch to the second electronic device may be detected. For example, when a call switch button (e.g., the call switch button 674 of FIG. 6B) is selected on the call waiting screen of the second electronic device, the first electronic device and the second electronic device may switch to a CMC call. When switching to the CMC call, the electronic device may operate in a call waiting state, and even in the call waiting state, the first electronic device may perform a function of maintaining the call connection with the counterpart's electronic device and relaying data transmitted and received between the counterpart's electronic device and the second electronic device.

According to various embodiments, in operation 750, the first electronic device may continue to perform the recording function, obtain second recording data including external voice data received from the second electronic device and other party's voice data received from the counterpart's electronic device, and store the second recording data in the memory.

According to various embodiments, in operation 740, the first electronic device may perform operation 730 when the call switching to the second electronic device is not detected.

According to various embodiments, when switching to the CMC call, the first electronic device may mix the counterpart's voice data received from the counterpart's electronic device and external voice data received from the second electronic device by using the IMS voice engine. The voice engine may transmit the mixed data to the IMS recorder, and the IMS recorder may process and store the recording data in the memory.

In this way, unlike recording of general calls, when recording CMC calls, the electronic device may mix and process recording data by using a framework-level IMS voice engine and an IMS recorder without using a kernel-level audio driver.

According to various embodiments, in operation 760, the first electronic device may detect re-switch of the call to the first electronic device.

According to various embodiments, in operation 770, when re-switching to the general call of the first electronic device, the first electronic device may continue to perform the recording function and store third recording data including user voice data and other party's voice data.

According to various embodiments, in operation 760, the first electronic device may perform operation 750 when the call is not switched to the first electronic device.

According to various embodiments, in operation 780, the first electronic device may merge the recorded first recording data, the second recording data, and the third recording data and store them as single file data in the memory.

A call recording method of an electronic device (e.g., the electronic device 200 in FIG. 2) according to various embodiments may include performing a call with a first external device (e.g., the counterpart's electronic device 280 of FIG. 2), generating, when a call recording function is started based on a user input, first recording data including user voice data inputted through a microphone of the electronic device and the counterpart's voice data received from the first external device, and store the first recording data in the memory (e.g., the memory 320 of FIG. 3), detecting a switch of the call with the first external device to a second external device (e.g., the second electronic device 270 of FIG. 2) connected to the electronic device through a call continuity service, and storing, in the memory, second recording data including the counterpart's voice data and external voice data received from the second external device.

According to various embodiments, merging the first recording data and the second recording data and storing the merged data in the memory as single file data may be further included.

According to various embodiments, transmitting, when receiving a call connection request with the first external device, information related to the call connection request to the second external device connected by the call continuity service may be further included, and the switch of the call with the first external device may be started according to an input on the second external device.

According to various embodiments, receiving external voice data received from the second external device through a cellular network or a local area network using an Internet protocol may be further included.

According to various embodiments, generating the first recording data may include mixing user voice data inputted through the microphone and the counterpart's voice data received from the first external device and transmit the mixture to an audio recorder by using an audio driver, and generating the first recording data from the mixed data by using the audio recorder.

According to various embodiments, the storing the second recording data may include mixing the counterpart's voice data received from the first external device and external voice data received from the second external device by using an IP multimedia subsystem (IMS) voice engine, and obtaining the second recording data from the mixed data by using the IMS recorder.

According to various embodiments, transmitting information indicating that the call recording function is in progress to the second external device when a call switch to the second external device is detected while the call recording function is in progress may be further included.

According to various embodiments, displaying an item indicating the call recording function on a screen indicating a call waiting state when a call switch to the second external device is detected while the call recording function is in progress may be further included.

According to various embodiments, detecting a re-switching of a call with the first external device to the electronic device in a state where the call with the first external device is switched to the second external device, and generating and storing third recording data including the user voice data and the counterpart's voice data in the memory may be further included.

## Claims

1. An electronic device comprising:
a display (160);
a communication module (340);
a microphone (350);
a memory (320); and
a processor (310) operatively connected to the display, the communication module, the microphone, and the memory,
wherein the processor is configured to:
perform a call between the electronic device and a first external device through the communication module;
generate, in a case that a call recording function is started based on a user input, first recording data including user voice data inputted through the microphone and counterpart's voice data received from the first external device through the communication module, and store the first recording data in the memory;
**characterised in that** the processor is further configured to:
detect a switch of the call with the first external device from the electronic device to a second external device connected to the electronic device through a call continuity service; and
when a switched call is performed between the first external device and the second external device:
transmit, using the communication module, external voice data received from the second electronic device to the first external device; and
store, in the memory, second recording data including the counterpart's voice data and the external voice data received from the second external device.

2. The electronic device of claim 1, wherein the processor is configured to merge the first recording data and the second recording data and store the merged data in the memory as single file data.

3. The electronic device of claim 1, wherein the processor is configured to, in case of receiving a call connection request with the first external device, transmit information related to the call connection request to the second external device connected by the call continuity service, and
wherein the switch of the call with the first external device is started according to an input on the second external device.

4. The electronic device of claim 1, wherein the communication module is configured to receive external voice data received from the second external device through a cellular network or a local area network using an Internet protocol.

5. The electronic device of claim 1, wherein the processor is configured to:
mix user voice data inputted through the microphone and the counterpart's voice data received from the first external device and transmit the mixture to an audio recorder by using an audio driver; and
generate the first recording data from the mixed data by using the audio recorder.

6. The electronic device of claim 1, wherein the processor is configured to:
mix the counterpart's voice data received from the first external device and the external voice data received from the second external device and transmit the mixture to an IMS recorder by using an IP multimedia subsystem, IMS, voice engine; and
obtain the second recording data from the mixed data by using the IMS recorder.

7. The electronic device of claim 1, wherein the processor is configured to, in a case that a call switch to the second external device is detected while the call recording function is in progress, transmit information indicating that the call recording function is in progress to the second external device.

8. The electronic device of claim 1, wherein the processor is configured to, in a case that a call switch to the second external device is detected while the call recording function is in progress, display an item indicating the call recording function on a screen indicating a call waiting state.

9. The electronic device of claim 1, wherein the processor is configured to:
detect a re-switch of the call with the first external device to the electronic device in a state in which the call with the first external device is switched to the second external device; and
generate third recording data including the user voice data and the counterpart's voice data and store the third recording data in the memory.

10. A call recording method of an electronic device, the method comprising:
performing a call between the electronic device and a first external device;
generating (730), in a case that a call recording function is started based on a user input, first recording data including user voice data inputted through a microphone of the electronic device and counterpart's voice data received from the first external device, and store the first recording data in a memory;
detecting (740) a switch of the call with the first external device from the electronic device to a second external device connected to the electronic device through a call continuity service;
**characterised in that** the method further comprises
when a switched call is performed between the first external device and the second external device:
transmitting external voice data received from the second electronic device to the first external device; and
storing (750), in the memory, second recording data including the counterpart's voice data and external voice data received from the second external device.

11. The method of claim 10, further comprising merging the first recording data and the second recording data and storing the merged data in the memory as single file data.

12. The method of claim 10, further comprising, in a case of receiving a call connection request with the first external device, transmitting information related to the call connection request to the second external device connected by the call continuity service,
wherein the switch of the call with the first external device is started according to an input on the second external device.

13. The method of claim 10, further comprising receiving external voice data received from the second external device through a cellular network or a local area network using an Internet protocol.

14. The method of claim 10, wherein generating the first recording data comprises:
mixing user voice data inputted through the microphone and the counterpart's voice data received from the first external device and transmit the mixture to an audio recorder by using an audio driver; and
generating the first recording data from the mixed data by using the audio recorder.

15. The electronic device of claim 1, wherein the processor is configured to, before storing the second recording data, transmit the counterpart's voice data to the second external device in response to the detection of the call switch and receive the second recording data from the second external device.

## Patentansprüche

1. Elektronische Vorrichtung, umfassend:
eine Anzeige (160);
ein Kommunikationsmodul (340);
ein Mikrofon (350);
einen Speicher (320); und
einen Prozessor (310), der mit der Anzeige, dem Kommunikationsmodul, dem Mikrofon und dem Speicher wirkverbunden ist,
wobei der Prozessor zu Folgendem konfiguriert ist:
Durchführen eines Anrufs zwischen der elektronischen Vorrichtung und einer ersten externen Vorrichtung über das Kommunikationsmodul;
Erzeugen, in einem Fall, dass eine Anrufaufzeichnungsfunktion basierend auf einer Benutzereingabe gestartet wird, erster Aufzeichnungsdaten, die Benutzersprachdaten, die über das Mikrofon eingegeben werden, und Sprachdaten des Gesprächspartners, die von der ersten externen Vorrichtung über das Kommunikationsmodul empfangen werden, enthalten, und Speichern der ersten Aufzeichnungsdaten in dem Speicher;
**dadurch gekennzeichnet, dass** der Prozessor ferner zu Folgendem konfiguriert ist:
Erkennen eines Umschaltens des Anrufs mit der ersten externen Vorrichtung von der elektronischen Vorrichtung zu einer zweiten externen Vorrichtung, die über einen Anrufkontinuitätsdienst mit der elektronischen Vorrichtung verbunden ist; und
wenn ein umgeschalteter Anruf zwischen der ersten externen Vorrichtung und der zweiten externen Vorrichtung durchgeführt wird:
Übertragen, unter Verwendung des Kommunikationsmoduls, externer Sprachdaten, die von der zweiten elektronischen Vorrichtung empfangen werden, an die erste externe Vorrichtung; und
Speichern, in dem Speicher, zweiter Aufzeichnungsdaten, die die Sprachdaten des Gesprächspartners und die externen Sprachdaten, die von der zweiten externen Vorrichtung empfangen werden, enthalten.

2. Elektronische Vorrichtung nach Anspruch 1, wobei der Prozessor dazu konfiguriert ist, die ersten Aufzeichnungsdaten und die zweiten Aufzeichnungsdaten zusammenzuführen und die zusammengeführten Daten in dem Speicher als Einzeldateidaten zu speichern.

3. Elektronische Vorrichtung nach Anspruch 1, wobei der Prozessor dazu konfiguriert ist, im Falle eines Empfangens einer Anrufverbindungsanforderung mit der ersten externen Vorrichtung, Informationen, die sich auf die Anrufverbindungsanforderung beziehen, an die zweite externe Vorrichtung, die durch den Anrufkontinuitätsdienst verbunden ist, zu übertragen, und
wobei das Umschalten des Anrufs mit der ersten externen Vorrichtung gemäß einer Eingabe an der zweiten externen Vorrichtung gestartet wird.

4. Elektronische Vorrichtung nach Anspruch 1, wobei das Kommunikationsmodul dazu konfiguriert ist, externe Sprachdaten zu empfangen, die von der zweiten externen Vorrichtung über ein Mobilfunknetz oder ein lokales Netzwerk unter Verwendung eines Internetprotokolls empfangen werden.

5. Elektronische Vorrichtung nach Anspruch 1, wobei der Prozessor zu Folgendem konfiguriert ist:
Mischen von Benutzersprachdaten, die über das Mikrofon eingegeben werden, und den Sprachdaten des Gesprächspartners, die von der ersten externen Vorrichtung empfangen werden, und Übertragen der Mischung an eine Audioaufzeichnungseinrichtung unter Verwendung eines Audiotreibers; und
Erzeugen der ersten Aufzeichnungsdaten aus den gemischten Daten unter Verwendung der Audioaufzeichnungseinrichtung.

6. Elektronische Vorrichtung nach Anspruch 1, wobei der Prozessor zu Folgendem konfiguriert ist:
Mischen der Sprachdaten des Gesprächspartners, die von der ersten externen Vorrichtung empfangen werden, und der externen Sprachdaten, die von der zweiten externen Vorrichtung empfangen werden, und Übertragen der Mischung an eine IMS-Aufzeichnungseinrichtung unter Verwendung einer IP-Multimedia-Subsystem-Sprachmaschine, IMS-Sprachmaschine; und
Erhalten der zweiten Aufzeichnungsdaten aus den gemischten Daten unter Verwendung der IMS-Aufzeichnungseinrichtung.

7. Elektronische Vorrichtung nach Anspruch 1, wobei der Prozessor dazu konfiguriert ist, in einem Fall, dass eine Anrufumschaltung an die zweite externe Vorrichtung erkannt wird, während die Anrufaufzeichnungsfunktion läuft, Informationen, die angeben, dass die Anrufaufzeichnungsfunktion läuft, an die zweite externe Vorrichtung zu übertragen.

8. Elektronische Vorrichtung nach Anspruch 1, wobei der Prozessor dazu konfiguriert ist, in einem Fall, dass eine Anrufumschaltung zu der zweiten externen Vorrichtung erkannt wird, während die Anrufaufzeichnungsfunktion läuft, ein Element, das die Anrufaufzeichnungsfunktion angibt, auf einem Bildschirm anzuzeigen, der einen Anrufwartezustand angibt.

9. Elektronische Vorrichtung nach Anspruch 1, wobei der Prozessor zu Folgendem konfiguriert ist:
Erkennen eines erneuten Umschaltens des Anrufs mit der ersten externen Vorrichtung zu der elektronischen Vorrichtung in einem Zustand, in dem der Anruf mit der ersten externen Vorrichtung zu der zweiten externen Vorrichtung umgeschaltet ist; und
Erzeugen dritter Aufzeichnungsdaten, die die Benutzersprachdaten und die Sprachdaten des Gesprächspartners enthalten, und Speichern der dritten Aufzeichnungsdaten in dem Speicher.

10. Anrufaufzeichnungsverfahren einer elektronischen Vorrichtung, wobei das Verfahren Folgendes umfasst:
Durchführen eines Anrufs zwischen der elektronischen Vorrichtung und einer ersten externen Vorrichtung;
Erzeugen (730), in einem Fall, dass eine Anrufaufzeichnungsfunktion basierend auf einer Benutzereingabe gestartet wird, erster Aufzeichnungsdaten, die Benutzersprachdaten, die über ein Mikrofon der elektronischen Vorrichtung eingegeben werden, und Sprachdaten des Gesprächspartners, die von der ersten externen Vorrichtung empfangen werden, enthalten, und Speichern der ersten Aufzeichnungsdaten in einem Speicher;
Erkennen (740) eines Umschaltens des Anrufs mit der ersten externen Vorrichtung von der elektronischen Vorrichtung zu einer zweiten externen Vorrichtung, die über einen Anrufkontinuitätsdienst mit der elektronischen Vorrichtung verbunden ist;
**dadurch gekennzeichnet, dass** das Verfahren ferner Folgendes umfasst:
wenn ein umgeschalteter Anruf zwischen der ersten externen Vorrichtung und der zweiten externen Vorrichtung durchgeführt wird:
Übertragen externer Sprachdaten, die von der zweiten elektronischen Vorrichtung empfangen werden, an die erste externe Vorrichtung; und
Speichern (750), in dem Speicher, zweiter Aufzeichnungsdaten, die die Sprachdaten des Gesprächspartners und externe Sprachdaten, die von der zweiten externen Vorrichtung empfangen werden, enthalten.

11. Verfahren nach Anspruch 10, ferner umfassend Zusammenführen der ersten Aufzeichnungsdaten und der zweiten Aufzeichnungsdaten und Speichern der zusammengeführten Daten in dem Speicher als Einzeldateidaten.

12. Verfahren nach Anspruch 10, ferner umfassend, in einem Falle eines Empfangens einer Anrufverbindungsanforderung mit der ersten externen Vorrichtung, Übertragen von Informationen, die sich auf die Anrufverbindungsanforderung beziehen, an die zweite externe Vorrichtung, die durch den Anrufkontinuitätsdienst verbunden ist,
wobei das Umschalten des Anrufs mit der ersten externen Vorrichtung gemäß einer Eingabe an der zweiten externen Vorrichtung gestartet wird.

13. Verfahren nach Anspruch 10, ferner umfassend Empfangen externer Sprachdaten, die von der zweiten externen Vorrichtung über ein Mobilfunknetz oder ein lokales Netzwerk unter Verwendung eines Internetprotokolls empfangen werden.

14. Verfahren nach Anspruch 10, wobei das Erzeugen der ersten Aufzeichnungsdaten Folgendes umfasst:
Mischen von Benutzersprachdaten, die über das Mikrofon eingegeben werden, und den Sprachdaten des Gesprächspartners, die von der ersten externen Vorrichtung empfangen werden, und Übertragen der Mischung an eine Audioaufzeichnungseinrichtung unter Verwendung eines Audiotreibers; und
Erzeugen der ersten Aufzeichnungsdaten aus den gemischten Daten unter Verwendung der Audioaufzeichnungseinrichtung.

15. Elektronische Vorrichtung nach Anspruch 1, wobei der Prozessor dazu konfiguriert ist, vor dem Speichern der zweiten Aufzeichnungsdaten die Sprachdaten des Gesprächspartners an die zweite externe Vorrichtung als Reaktion auf die Erkennung der Anrufumschaltung zu übertragen und die zweiten Aufzeichnungsdaten von der zweiten externen Vorrichtung zu empfangen.

## Revendications

1. Dispositif électronique comprenant :
un dispositif d'affichage (160) ;
un module de communication (340) ;
un microphone (350) ;
une mémoire (320) ; et
un processeur (310) connecté fonctionnellement au dispositif d'affichage, au module de communication, au microphone et à la mémoire,
dans lequel le processeur est configuré pour :
réaliser un appel entre le dispositif électronique et un premier dispositif externe au travers du module de communication ;
générer, dans le cas où une fonction d'enregistrement d'appel est initiée sur la base d'une saisie d'utilisateur, des premières données d'enregistrement comprenant des données vocales d'utilisateur saisies au travers du microphone et des données vocales d'homologue reçues à partir du premier dispositif externe au travers du module de communication, et stocker les premières données d'enregistrement dans la mémoire ;
**caractérisé en ce que** le processeur est en outre configuré pour :
détecter une commutation de l'appel avec le premier dispositif externe à partir du dispositif électronique vers un second dispositif externe connecté au dispositif électronique au travers d'un service de continuité d'appel ; et
lorsqu'un appel commuté est réalisé entre le premier dispositif externe et le second dispositif externe :
transmettre, à l'aide du module de communication, des données vocales externes reçues à partir du second dispositif électronique vers le premier dispositif externe ; et
stocker, dans la mémoire, des deuxièmes données d'enregistrement comprenant les données vocales de l'homologue et les données vocales externes reçues à partir du second dispositif externe.

2. Dispositif électronique de la revendication 1, dans lequel le processeur est configuré pour fusionner les premières données d'enregistrement et les deuxièmes données d'enregistrement et stocker les données fusionnées dans la mémoire en tant que données de fichier unique.

3. Dispositif électronique de la revendication 1, dans lequel le processeur est configuré pour, en cas de réception d'une demande de connexion d'appel avec le premier dispositif externe, transmettre des informations liées à la demande de connexion d'appel vers le second dispositif externe connecté par le service de continuité d'appel, et
dans lequel la commutation de l'appel avec le premier dispositif externe est initiée en fonction d'une saisie sur le second dispositif externe.

4. Dispositif électronique de la revendication 1, dans lequel le module de communication est configuré pour recevoir des données vocales externes reçues à partir du second dispositif externe au travers d'un réseau cellulaire ou d'un réseau local à l'aide d'un protocole Internet.

5. Dispositif électronique de la revendication 1, dans lequel le processeur est configuré pour :
mélanger des données vocales d'utilisateur saisies au travers du microphone et les données vocales de l'homologue reçues à partir du premier dispositif externe et transmettre le mélange vers un enregistreur audio à l'aide d'un pilote audio ; et
générer les premières données d'enregistrement à partir des données mélangées à l'aide de l'enregistreur audio.

6. Dispositif électronique de la revendication 1, dans lequel le processeur est configuré pour :
mélanger les données vocales de l'homologue reçues à partir du premier dispositif externe et les données vocales externes reçues à partir du second dispositif externe et transmettre le mélange vers un enregistreur IMS à l'aide d'un moteur vocal de sous-système multimédia IP, IMS ; et
obtenir les deuxièmes données d'enregistrement à partir des données mélangées à l'aide de l'enregistreur IMS.

7. Dispositif électronique de la revendication 1, dans lequel le processeur est configuré pour, dans le cas où une commutation d'appel vers le second dispositif externe est détectée pendant que la fonction d'enregistrement d'appel est en cours, transmettre des informations indiquant que la fonction d'enregistrement d'appel est en cours vers le second dispositif externe.

8. Dispositif électronique de la revendication 1, dans lequel le processeur est configuré pour, dans le cas où un commutateur d'appel vers le second dispositif externe est détecté pendant que la fonction d'enregistrement d'appel est en cours, afficher un élément indiquant la fonction d'enregistrement d'appel sur un écran indiquant un état d'attente d'appel.

9. Dispositif électronique de la revendication 1, dans lequel le processeur est configuré pour :
détecter une nouvelle commutation de l'appel avec le premier dispositif externe vers le dispositif électronique dans un état dans lequel l'appel avec le premier dispositif externe est commuté vers le second dispositif externe ; et
générer des troisièmes données d'enregistrement comprenant les données vocales d'utilisateur et les données vocales de l'homologue et stocker les troisièmes données d'enregistrement dans la mémoire.

10. Procédé d'enregistrement d'appel d'un dispositif électronique, le procédé comprenant :
la réalisation d'un appel entre le dispositif électronique et un premier dispositif externe ;
la génération (730), dans le cas où une fonction d'enregistrement d'appel est initiée sur la base d'une saisie d'utilisateur, de premières données d'enregistrement comprenant des données vocales d'utilisateur saisies au travers d'un microphone du dispositif électronique et des données vocales d'homologues reçues à partir du premier dispositif externe, et le stockage des premières données d'enregistrement dans une mémoire ;
la détection (740) d'une commutation de l'appel avec le premier dispositif externe à partir du dispositif électronique vers un second dispositif externe connecté au dispositif électronique au travers d'un service de continuité d'appel ;
**caractérisé en ce que** le procédé comprend en outre, lorsqu'un appel commuté est réalisé entre le premier dispositif externe et le second dispositif externe :
la transmission de données vocales externes reçues à partir du second dispositif électronique vers le premier dispositif externe ; et
le stockage (750), dans la mémoire, de deuxièmes données d'enregistrement comprenant les données vocales de l'homologue et les données vocales externes reçues à partir du second dispositif externe.

11. Procédé de la revendication 10, comprenant en outre la fusion des premières données d'enregistrement et des deuxièmes données d'enregistrement et le stockage des données fusionnées dans la mémoire en tant que données de fichier unique.

12. Procédé de la revendication 10, comprenant en outre, dans le cas de la réception d'une demande de connexion d'appel avec le premier dispositif externe, la transmission d'informations liées à la demande de connexion d'appel vers le second dispositif externe connecté par le service de continuité d'appel, dans lequel la commutation de l'appel avec le premier dispositif externe est initiée en fonction d'une saisie sur le second dispositif externe.

13. Procédé de la revendication 10, comprenant en outre la réception de données vocales externes reçues à partir du second dispositif externe au travers d'un réseau cellulaire ou d'un réseau local à l'aide d'un protocole Internet.

14. Procédé de la revendication 10, dans lequel la génération des premières données d'enregistrement comprend :
le mélange de données vocales d'utilisateur saisies au travers du microphone et des données vocales de l'homologue reçues à partir du premier dispositif externe et la transmission du mélange vers un enregistreur audio à l'aide d'un pilote audio ; et
la génération des premières données d'enregistrement à partir des données mélangées à l'aide de l'enregistreur audio.

15. Dispositif électronique de la revendication 1, dans lequel le processeur est configuré pour, avant le stockage des deuxièmes données d'enregistrement, transmettre les données vocales de l'homologue au second dispositif externe en réponse à la détection de la commutation d'appel et recevoir les deuxièmes données d'enregistrement à partir du second dispositif externe.
